# EUROPEAN PATENT SPECIFICATION

(11) **EP 4 323 583 B1**
(45) Date of publication and mention of the grant of the patent: **09.09.2026**
(21) Application number: 22719109.5
(22) Date of filing: 01.04.2022
(51) Int. Cl.: D21H 11/10, B65D 81/38, D21H 17/36, D21H 21/56, D21H 27/10

(54) **CELLULOSE FIBER FOAM COMPOSITIONS**
ZELLULOSEFASER-SCHAUMSTOFFZUSAMMENSETZUNGEN
COMPOSITIONS DE MOUSSE DE FIBRES DE CELLULOSE

(30) Priority: 14.04.2021 US 202163174794 P; 25.03.2022 US 202217704888
(43) Date of publication of application: 21.02.2024
(73) Proprietor: Apple Inc., Cupertino CA 95014 (US)
(72) Inventor: XIANG, Yang, San Jose, California 95128 (US); CAI, Jun, Cupertino, California 95014 (US); GLASS, John W., Cupertino, California 95014 (US); TORRES, Jose M., Cupertino, California 95014 (US); LONG, Michael S., Cupertino, California 95014 (US); COWAN, Wayne H., Cupertino, California 95014 (US); LIM, Hseh Tjun Tereave, Cupertino, California 95014 (US)
(74) Representative: Lang, Johannes
(86) International application number: PCT/US2022/023062
(87) International publication number: WO 2022/221074

(56) References cited:
- WO-A1-2013/144449
- WO-A1-2015/173474

## Description

This application claims priority to and the benefit of U.S. Patent Application No. 17/704,888 filed March 25, 2022, and U.S. Provisional Patent Application No. 63/174,794, filed April 14, 2021, titled "Cellulose Fiber Foam Compositions".

### FIELD

The described embodiments relate generally to packaging. More particularly, the present embodiments relate to packaging utilizing foamed cellulose/paper products, systems, and methods according to the features of the independent claims, such that volumetric packaging components formed from cellulose foam are utilized. Compositions of cellulose-fiber foam are disclosed.

### BACKGROUND

For consumer packaging, lightweight, environmentally friendly, and volumetric components are desired. Various types of fiber (e.g., cellulose-fiber-based) packaging components are utilized in the art. For example, paper cable retainers, paperboard, grayboard, corrugated cardboard, and molded fiber components are all known ways of producing a final package. However, it is difficult to make large components with these types of materials and challenging to achieve resilient cushioning with them. More complex support structures must be designed and engineered, hidden within the outer shell of these materials, or a different material has generally been used (e.g., plastic trays, polystyrene volumetric blocks, etc.). Larger cushioning components or impact protection blocks, e.g., those typically made out of a styrofoam-type material, such as polystyrene foam (e.g., closed-cell expanded or extruded polystyrene foam) would benefit from an environmentally friendly solution such as cellulose-fiber foam.

New and unique fiber-based solutions comprising cellulose-fiber foam components described herein also use fiber compositions in their manufacture like molded fiber components, but they may include filled volumes (e.g., volumetric solids) - unlike strictly molded fiber components. In this way, cellulose-fiber foam components share similarities with injection molded components and polystyrene foam components, in that filled volumes of material are contemplated.

Packaging formed from cellulose-fiber foam also shares some of the same benefits over polystyrene foam as molded fiber packaging, such as a higher degree of strength, both in structural (e.g., flexibility and weight-bearing) terms and tear strength and in improved cosmetic characteristics such as brightness, color saturation, whiteness, smoothness, and edge sharpness.

A challenge in cellulose-fiber based packaging is finding strength and resiliency, and balancing those parameters with component weight. Molded fiber components may require higher density, leading to an increase in total shipping weight. At the same time, molded fiber components may also have poorer impact performance (e.g., absorbing shock energy and maintaining good resilience to sustain multiple shocks) than plastic foams.

What is needed is a cellulose-fiber based packaging that achieves these and other goals. By constructing packaging and cushioning components with a as a cellulose-fiber foam by uniquely blending relatively longer fibers serving as mechanical structure with refined chemical fibers serving as a bonding mechanism for the relatively longer fibers together, a lower density, energy absorbing, and resilient cellulose-fiber foam is disclosed, without the need for a stand-alone foaming agent. Particularly, selection of an appropriate bonding agent with particular hydrolysis may eliminate the need for a separate surfactant. In this way, synergy may be achieved in utilizing a bonding agent as a foaming agent, and make additional additives otherwise unavailable as an option for including in cellulose-fiber foam compositions.
WO 2015/173474 A1 discloses a method for producing a board, wherein a foamed fibrous layer is formed by contacting foam forming of a fibrous slush and said foamed fibrous layer is dried to form a web, wherein polyvinyl alcohol is used as a foaming agent in foam forming, and further concerns a system for producing a board and a board with at least one dried foamed fibrous layer, wherein the foamed fibrous layer is made from a mixture of fibrous slush with foam formed from water and polyvinyl alcohol.

### SUMMARY

The present invention is defined by the features of the independent claim(s). Preferred advantageous embodiments thereof are defined by the sub-features of the dependent claims.
Any reference to "embodiment(s)", "example(s)" or "aspect(s) of the invention" in this description not falling under the scope of the claims should be interpreted as illustrative example(s) for understanding the invention.

The present invention as claimed relates to packaging including a base box, a lid configured to close the base box and enclose a product within the packaging, and a cellulose-fiber foam component configured to provide cushioning and is formed in a cushioning component for the packaging. The cellulose-fiber foam component is formed from a foamed slurry cured into a foamed fiber cellular structure. The foamed slurry includes a mechanical fiber component, a chemical fiber component, and a bonding agent which obviates the need for a stand-alone foaming agent. The cellulose-fiber foam component includes a filled volume of foamed fiber, such that the cellulose-fiber foam component is a volumetric solid.

In some embodiments, the bonding agent further includes foaming properties when in the foamed slurry, such that the bonding agent also serves as a foaming agent when in the foamed slurry. In some embodiments, the bonding agent comprising polyvinyl alcohol.

In some embodiments, the cellulose-fiber foam component has a density of less than 40 kg/mA 3, or further less than 35 kg/mA 3, or further less than 25 kg/mA 3. The mechanical fiber component has an average fiber length of greater than 1 mm. In some embodiments, the cellulose-fiber foam component is re-pulpable.

The present invention as claimed relates to a composition, including a mechanical fiber component, a chemical fiber component, and a bonding agent. The composition is moldable in three dimensions and forms a cellulose-fiber foam structure configured to provide cushioning and is formed in a cushioning component for the packaging when dried. A surfactant (or separate surfactant) is not used in the forming of the composition.

In some embodiments, a ratio of mechanical fiber to chemical fiber is in a range between about 98:2 to about 40:60. In some embodiments, the mechanical fiber is about 70% of the composition, and the chemical fiber is about 30% of the composition.

In some embodiments, the mechanical fiber component has an average fiber length of greater than 1 mm. The bonding agent in some embodiments includes polyvinyl alcohol. The polyvinyl alcohol has a degree of hydrolysis of between about 60% to about 90% in some embodiments. The polyvinyl alcohol has a degree of hydrolysis that provides a foaming agent effect when the composition is formed into a foamed slurry.

In some embodiments, the composition is formed into a cellulose-fiber foam structure, and it has a density of less than 35 kg/mA 3, or further less than 25 kg/mA 3.

The present invention as claimed relates to a method of forming a cellulose-fiber foam component configured to provide cushioning and formed in a cushioning component for the packaging, the method. The method includes forming a foamed fiber slurry, where the fiber slurry includes a mechanical fiber component, a chemical fiber component, a fluid component, and a bonding agent. In some embodiments, the bonding agent serves as a foaming agent. The method further includes introducing the foamed slurry into a volumetric mold such that the foamed slurry is sufficiently dewatered to retain a volumetric foamed fiber structure in the shape of the mold, and removing the cellulose-fiber foam component from the mold.

In some embodiments, no surfactant is used in the formation of the cellulose-fiber foam component. The foamed slurry is introduced into volumetric mold such that the foamed fiber product produced has a consistent density throughout the volume. In some embodiments, the bonding agent comprises polyvinyl alcohol.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 shows an exemplary package including an exemplary cellulose-fiber foam packaging component in an embodiment.
FIG. 2 shows a schematic image of a cellulose-fiber foam composition in an embodiment.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

Packaging made out of recyclable and/or biodegradable materials, such as paper or other cellulose-based products can reduce environmental impact, especially when it replaces a plastic, plastic film component, or an expanded polystyrene or other non-biodegradable foam component, for example. Packaging that is interesting in character and well-executed may boost a product's or a brand's reputation, thereby attracting new customers and retaining previous customers. Packaging described in this document achieves these and other beneficial characteristics by balancing structural robustness, eco-friendly materials, and aesthetic elements. A product contained by the packaging may be, for example, an electronic device such as, for example, a desktop, monitor, laptop, tablet computer, or smartphone, smart watch, or it may be a non-electronic device.

In some embodiments, the packaging may be shipping or finished packaging e.g., packaging used for shipping a finished packaging or a finished packaging for containing and conveying a product to a user such as may be used in a retail setting.

As described above, the packaging described herein provides materials and packaging solutions utilizing environmentally friendly materials, specifically cellulose-fiber foam. Cushioning properties via the cellulose-fiber foam compositions are provided, thereby increasing robust protection of a product in packaging, without materials that are not environmentally friendly.

In particular, a goal of cellulose-fiber compositions is forming a composition that is able to strain a larger distance under load and also maintain resilience to absorb multiple impacts and return to a pre-impact state. By combining mechanical fibers with chemical fibers along with an appropriate bonding agent, embodiments described herein achieve this objective.

Advantageously, this improves upon prior systems having, for example, expanded polystyrene components, that are less environmentally friendly than cellulose-fiber components. By designing appropriate compositions, resistance and elasticity can be achieved through cellulose-fiber foam components. Components described herein may provide a fiber based alternative to traditional expanded polystyrene, foam, or flexible retention film shipper designs used in previous packaging.

Packaging and cushioning components described herein improve on past designs, and provide eco-friendly components that may absorb multiple impacts due to their resilient design, and protect against potentially harmful vibrations during shipping-without adding additional components or complex substructures. Packaging described in this document achieves these and other beneficial characteristics by balancing structural robustness, eco-friendly materials, and aesthetic elements.

These and other embodiments are discussed below with reference to the accompanying figures. However, those skilled in the art will readily appreciate that the detailed description given herein with respect to these figures is for explanatory purposes only and should not be construed as limiting.

Similar to molded fiber processes, the various fibers used in cellulose-fiber foam compositions may be pre-processed or refined through various mechanical or chemical processes in order to control various parameters (e.g., size of fibers, length of fibers, shape of fibers, electric charge of fibers, color of fibers, bonding ability). And with respect to forming the cellulose-fiber foam components, a foamed slurry composition may include fluid/fiber proportions (sometimes referred to as "consistency"), wet foam density (e.g., density of the slurried foam), additives, and other slurry-forming parameters being controlled to affect particular end product characteristics. During processing, the pressure and flow rate of the foamed-slurry into the mold, drying time and processing, etc., can all be controlled to affect particular end product characteristics.

Some embodiments are directed to packaging including a cellulose-fiber foam component. The cellulose-fiber foam component includes a foamed fiber component having a cellular structure defining a filled volume of foamed fiber, such that the cellulose-fiber component is a volumetric solid. The cellular structure may have a density within the filled volume. The cellulose-fiber foam component may be configured to provide cushioning, such that it may be formed in a cushioning component for packaging.

Density may be defined based on foamed fiber content or may be defined based on the cellular structure. The cellulose-fiber foam component may include various constituent parts of the composition, which also may impact density. Wet foam density may be defined as the density of the foamed slurry, and may vary according to the consistency, density of the fiber component(s), etc. Density of the foamed fiber may varying according to one or more of a pressure of the foamed slurry as it is pumped into a mold, a rate at which the foamed slurry is pumped into the mold, and a temperature of the slurry as it is pumped into the mold. In some embodiments, the density of foamed fiber is formed based on varying one or more of a wet foam density or consistency of the foamed slurry.

In cellulose-fiber foam compositions generally, a foaming agent may be used in the formation of the foamed slurry, such as sodium dodecyl sulfate ("SDS"). And other types of foaming agents (cationic or non-ionic surfactants) can be used depending on the type or nature of potential strength aide to be used (cationic or non-ionic). In some cases, due to SDS's anionic nature, SDS may hinder inter-fiber bonding and use of cationic bonding agents.

However, a synergy has been discovered and developed, such that polymeric additives such as cationic starch, or polyamio-amine-epichlorohydrin ("PAE") or poly(D-glucosamine, e.g., chitosan), or poly(vinyl alcohol) ("PVOH") can be added to enhance inter-fiber bonding strength.

Particularly PVOH (in solution) may be used to replace a foaming agent in the slurry, such as SDS which is ionic, effectively acting as a foaming agent, while retaining its properties as an enhancement to inter-fiber bonding strength as a bonding agent after drying. Indeed, by using PVOH, significant dry foam density and increased impact performance is achievable. Additionally, in part due to its non-ionic nature, PVOH allows additional options for potential additives, fibers, etc., in part because SDS's negative charge may serve as a repellant for some constituent parts of a cellulose-fiber foam composition. And with a tuned degree of hydrolysis and/or molecular weight or viscosity, PVOH may be utilized as an effective foaming agent while retaining its bonding agent properties. For example, unlike solutions of partially hydrolyzed PVOH, solutions of fully and super hydrolyzed PVOH may not foam. A partially or middle hydrolyzed PVOH having a hydrolysis of between about 60% to about 90% and viscosity (about 4% solution at about 20°C) ranging between about 2.5 mPa.s to about 40 mPa.s has been found effective. PVOH may be used at a dosage ranging from between about 0.1% (based total of slurry) to about 1.5%.

Selecting an appropriate PVOH for use in these cases achieves balance of one or more of needed foaming ability and bonding strengths, slurry consistency (fiber concentration), targeted wet foam density (WFD), and final dry foam density.

Additionally, by replacing ionic SDS with non-ionic PVOH, a wide array of additional potential additives are available, because the potential side-effect of ionic SDS bonding with additives that are undesirable is eliminated. Particularly, cationic bonding agents may be adversely affected with ionic SDS, in that they may be neutralized and thus lose bonding properties in terms of bonding fibers together (as fibers also are generally negatively charged).

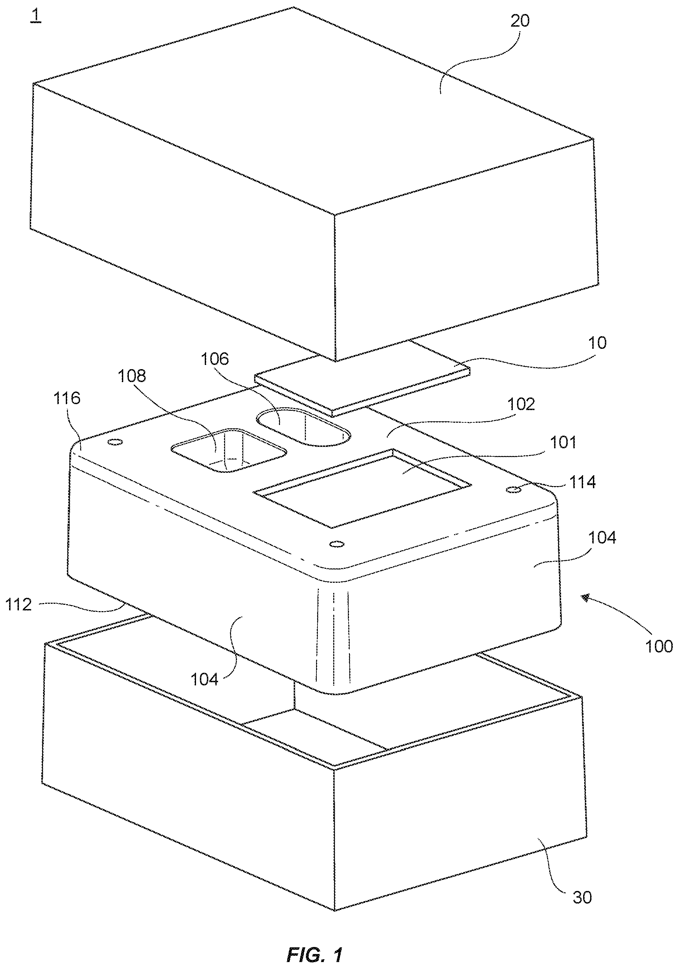

FIG. 1 shows an exemplary package 1 including an exemplary cellulose-fiber foam packaging component 100, according to an embodiment, which may be a cushioning component. In some embodiments, cellulose-fiber foam packaging component 100 may provide cushioning to a product 10 within the packaging. In some embodiments, foamed packaging component 100 may be enclosed within a box, for example, having lid 20 and base box 30. These components taken together may house product 10. Additionally, boxes, trays, sleeves, and other packaging components are contemplated in use of a finished package. A finished package may include separate pieces such as one or more packaging components 100, base box 30, lid 20, boxes, trays, sleeves, or other packaging components that are bonded together, using for example, adhesive, tape, or welding.

Product packaging component 100 may be configured as a three-dimensional shape having a filled volume of cellulose-fiber foam, that is, a component that has been formed from foamed cellulose-fiber, and having surfaces changing orientation in three dimensions. In some embodiments, surfaces may extend in multiple planes, and the surfaces may extend parallel, normal, or at some other angle with respect to one another. In some embodiments, product packaging component 100 may define a three-dimensional void in space, e.g., a partially hollow three-dimensional shape. "Three-dimensional shape" or "volumetric" as used herein does not describe a flat sheet. As used herein, "foamed fiber" refers to fiber that has been part of a foamed slurry (e.g., in which air or another gaseous medium has been integrated into the slurry to develop a foam structure, such as by mixing or pressurized introduction for example), in contrast to a fiber in a different slurry type, such as non-foamed fiber as would be used in molded fiber applications.

In some embodiments, product packaging component 100 may include an outer surface including a top wall 102, various curved walls, and a side wall 104, and bottom surface defining a volumetric solid. These surfaces may include edges, such as bottom edge 112. In some embodiments, bottom edge 112 may be chamfered or filleted, for example, so as to couple with a separate packaging component. Top wall 102 may include at least one recess 101, 106, 108, for housing a product, component, or accessory. The various recesses may be configured as pockets, or indentations for locating a portion of a product, component, or accessory in the correct intended position on top wall 102. Additional indentations or holes such as indentations 114 may be provided for locating a product, component, or accessory. For example, top wall 102 may include four indentations 114 for receiving corresponding protrusions (e.g., "feet") on the bottom of a particular product 10. Indentations 114 may ensure that the product is properly aligned in an aesthetically appealing intended location on top wall 102. In some embodiments, proper positioning of the product may be achieved through protrusions on top wall 102 to be received by indentations in product, or to simply register against sides of the product to locate it relative to component 100. In some embodiments, multiple packaging components may coact together to hold a product, e.g., holding one side of a product in one packaging component 100, and another side of the product in a separate packaging component 100.

Convex curved wall 116 surrounds top wall 102 and separates top wall 102 from side wall 104. Side wall 104 surrounds top wall 102 and extends from convex curved wall 116 to a bottom edge. These walls may extend in various planes with respect to one another. In some embodiments, packaging component 100 may not have a convex curve, but may instead have a different shape, such as, for example, a chamfer, one or more steps, or a concave curve. In some embodiments, a portion of product packaging component 100 may be configured as a flat plate shape, having a thickness, however in any event, product packaging component 100 will also include a volumetric component, with a three-dimensional shape. For example, a portion of product packaging component will include a thickness greater than the maximum thickness dimension of conventional 2-D paper components (such as paper or cardstock).

The product packaging component 100 may include a bottom surface, defining a volume in combination with the other surfaces of packaging component 100. And the bottom surface may have projections like the recesses on the top wall in some embodiments.

By forming a composition by uniquely blending mechanical pulp ("MP") containing relatively long and relatively stiff fibers with refined chemical pulp ("CP") or micro-fibrillated cellulose ("MFC"), or cellulose filaments ("CF"), or cellulose nano-fiber ("CNF"), improved resilience, improved strength and ability to strain over larger distances, and decreased density can be achieved for cushioning components formed from cellulose-fiber foam compositions.

Mechanical pulp may include pulps such as thermal-mechanical pulp ("TMP"), chemical-mechanical pulp ("CMP"), chemical-thermal-mechanical pulp ("CTMP"), and bleached chemical-thermal-mechanical pulp ("BCTMP"). Fibers from mechanical pulps are relatively stiff but may have relatively poor bonding strength compared to other elements of a cellulose-fiber foam composition. In contrast, fibers from refined chemical fibers such as MFC, or CF, or CNF are relatively more flexible and have a stronger bonding ability when compared to mechanical pulps.

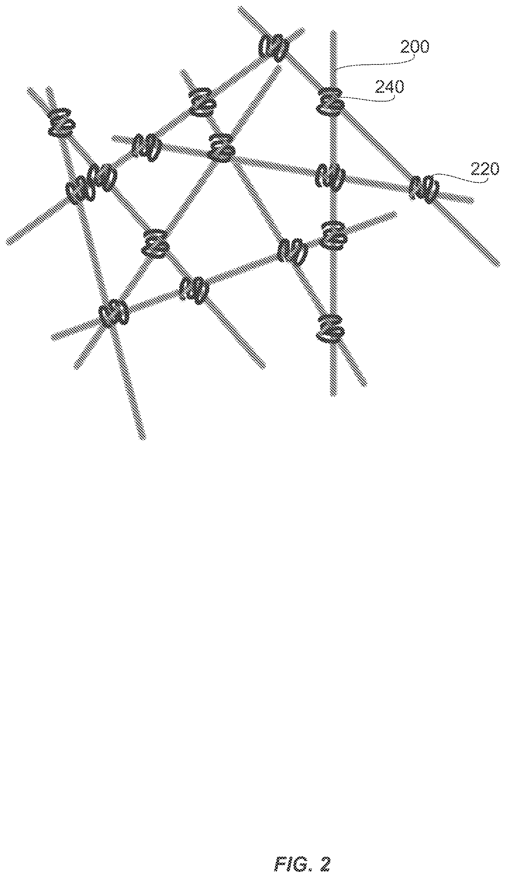

Compositions disclosed herein may utilize mechanical fibers as beam-like elements in a mechanical structure, and use refined chemical fibers or MFC, or CNF as glue/bonding elements to bond the mechanical fibers together to form a lower density, energy absorbing, and resilient cellulose-fiber foam, e.g. as shown in FIG. 2. FIG. 2 shows an exemplary cellulose-fiber foam composition including mechanical fibers 200, refined fibers 220 such as refined bleached softwood kraft pulp ("BSKP") or MFC or CF or CNF, and bonding agents/cross-linkers 240. In some embodiments, distribution of the fibers and other constituent elements results in a relatively uniform density of cellulose-fiber foam, in random orientation. In this way, strain along any given direction and resilience along any given direction may be maintained as uniform throughout a finished component.

In some embodiments, a fiber length of the mechanical pulp is at least 1.0 mm. In some embodiments, a fiber length of the mechanical pulp is at least 2.0 mm. Mechanical pulps typically contain relatively fine fibers (sometimes referred to as "fines" or "mechanical fines") as a result of the mechanical pulping process. In contrast to mechanical fibers having a sufficient length, mechanical fines are substantially shorter than 1.0 mm and are generally too short to function as beams or structural components. Moreover, mechanical fines do not generally possess good bonding properties (e.g., are not good glue/bonding elements). Thus, utilizing fines-removed mechanical pulp in forming cellulose-fiber foam compositions may be preferable for enhancing structural performance.

In some embodiments, the ratio of mechanical pulp to refined CP (or to MFC, or to CNF) may be in a range of about 98:2 to about 40:60, depending on impact performance targeted. Polycarbonxylic acids such as anhydrous citric (CA) or 1,2,3-butanetetracarboxylic acid (BTCA) can be used as a cross-linker to further enhance dry and wet bonding strength of the composition (e.g., the fiber network, in forming covalent bonds and relatively longer strings of bonding). In terms of cross-linking, balancing wet strength for forming the components while maintaining recyclability may be achieved by tuning cross-linking. In some embodiments, sizing agents may be used such as alkyl ketene dimer ("AKD") or alkyl succinic anhydride ("ASA") for further improving water resistance and maintaining foam strength at high relative humidity ("RH") environment. And in general, dry or wet strength aides can be added for further improving the strength of the ultimate component.

Exemplary compositions are found below in Table 1, but should not be seen as limiting in view of the present disclosure. Indeed, each of the representative compositions may omit a foaming agent, and as discussed above instead include polymeric additives such as cationic starch, or polyamio-amine-epichlorohydrin ("PAE") or poly(D-glucosamine, e.g., chitosan), or poly(vinyl alcohol) ("PVOH") can be added to enhance inter-fiber bonding strength. Particularly PVOH may be used to replace a foaming agent, such as SDS. PVOH may be selected to replace an ionic foaming agent (which may inhibit fiber bonding due to the negative charge of the foaming agent), and PVOH may effectively serve as a foaming agent, while retaining its properties as a bonding agent and an enhancement to inter-fiber bonding strength. Each of the compositions below may also remove the foaming agent, particularly when PVOH or other suitable bonding agent that also may serve as a foaming agent is used. Advantageously, the cellulose-fiber compositions disclosed herein are able to strain a larger distance under load and also maintain resilience to absorb multiple impacts and return to a pre-impact state. By combining mechanical fibers with chemical fibers along with an appropriate bonding agent, e.g., PVOH, embodiments described herein achieve this objective. Additionally, by using PVOH in the compositions without SDS, less fiber is required, such that lower density cellulose-fiber foam compositions may be formed.

**Table 1 Representative compositions**

| Reference Number | Composition |
|---|---|
| 1 | 100% mechanical pulp (MP) + foaming agent |
| 2 | 100% fines-removed MP + foaming agent |
| 3 | 70% MP + 30% refined chemical pulp (CP) + foaming agent |
| 4 | 70% fines-removed MP + 30% refined CP + foaming agent |
| 5 | 69.3% fines-removed MP + 29.7% refined CP + 1% bonding agent + cross-linker+ foaming agent |
| 6 | 69.3% fines-removed MP + 29.7% refined CP + 1% bonding agent + cross-linker+ internal sizing agent + foaming agent |
| 7 | 97% fines-removed MP + 3% CNF + foaming agent |
| 8 | 96.03% fines-removed MP + 2.97% CNF + 1% bonding agent + foaming agent |
| 9 | 96.03% fines-removed MP + 2.97% CNF + 1% bonding agent + cross-linker+ foaming agent |
| 10 | 96.03% fines-removed MP + 2.97% CNF + 1% bonding agent + cross-linker+ + internal sizing + foaming agent |

Exemplary impact/drop test data was collected using a uniform sample size of 180 mm (length) x 180 mm (width) x 50 mm (height). Controlled impact energy of 900 J/m^2 was applied. Six drops were performed for each sample, and performance characteristics such as strain, G-value (cushioning performance), and degradation (foam resilience) were reported for each drop. The results show samples using the PVOH instead of SDS having improved performance characteristics.

As an example, a sample using PVOH taking the place of a foaming agent and retaining its bonding agent properties, in comparison to a sample using SDS and not PVOH shows a much lower dry foam density, e.g., about a 41% reduction in dry foam density. This means that for the same dimension sample as above , a part using SDS having a 54 kg/m^3 density would have the potential to be replaced by a part having a 32 kg/m^3 density. This results in material and weight savings by using PVOH instead of SDS without sacrificing performance.

At the same time, a sample using PVOH taking the place of a foaming agent and retaining its bonding agent properties, in comparison to a sample using SDS and not PVOH shows a much lower G-value increase over successive drops. Over six drops, a sample using PVOH exhibited about a 3.6% G-value increase, in comparison to a sample using SDS exhibiting about a 47% G-value increase. This result shows that the sample using PVOH retains cushioning performance properties over successive drops more than one using SDS. Indeed, the PVOH sample showed a significantly lower G-value in drop 3 (about 22.6%) and drop 6 (about 30.1%). Similarly, lower degradation was observed in the sample using PVOH: about 41.8% lower, about 33.8% lower, and about 26.2% lower than the sample using SDS after drops 1, 3, and 6, respectively. Thus the PVOH sample maintains cushioning and resilience through successive drops. Finally, the PVOH sample was found to be able to absorb a higher ratio of strain to degradation: about 44.0% higher, about 43.7% higher, and about 42.0% higher than the SDS sample after drops 1, 3, 6, respectively. Thus, for a given acceptable degradation, samples using PVOH may strain a larger amount.

Sample parts using PVOH also show greater wet strength than parts using SDS, which is an important performance parameter for cellulose-fiber foam products to perform well at a high relative humidity environment (rather than a nominal or low relative humidity environment).

Additional additives were also tested in relation to the cellulose-fiber foam products described herein. PVOH fiber (in addition to the slurry addition described herein) having a diameter ranging from 5 µm to 20 µm, and cut length ranging from 2 mm to 8 mm (dissolving temperature in water ranging from about 50°C to about 100°C) can be used to improve resilience. These PVOH fibers resulted in about 27% lower degradation after drop 6, without negatively affecting G-value. Further, carboxymethyl cellulose ("CMC") was initially tested for enhancing inter-fiber bonding, and has been found that it significantly improves wet foam stability, reduces or eliminates part shrinkage or bowing, improves fiber distribution in final dry foams, and improves consistency of final part quality. CMC with degree of substitution ranging from between about 40% to about 80%, having a viscosity (2% solution at 25°C) ranging from between about 100 mPa.s to about 1000 mPa.s may be used. Additionally, by using an additive of around 3% CMC reduces part density and lowers G-value in drop 6, and has no negative impact on degradation. For example, part density has been shown to have been reduced by about 28% (from 31 kg/m^3 to 24 kg/m^3), and a 15% lower G-value in drop 6 has been shown (from 91.31 to 77.20). Advantageously, this reduces overall part weight and improves resilience without further degradation in the part.

As discussed above, mechanical pulp referenced herein may include pulps such as thermal-mechanical pulp ("TMP"), chemical-mechanical pulp ("CMP"), chemical-thermal-mechanical pulp ("CTMP"), and bleached chemical-thermal-mechanical pulp ("BCTMP"). Fibers from mechanical pulps are relatively stiff but may have relatively poor bonding strength compared to other elements of a cellulose-fiber foam composition. In contrast, fibers from refined chemical fibers such as BSKP or MFC or CF or CNF are relatively more flexible and have a stronger bonding ability when compared to mechanical pulps. Exemplary test results show that the ratio of mechanical pulp such as BCTMP or CTMP to refined chemical pulp such as BSKP in a composition has an effect on impact/drop performance (and in turn degradation and G-value). In general, as the ratio of mechanical pulp to chemical pulp increases, degradation percentage decreases, including over successive drops. Over six drops, a sample having 70% mechanical pulp showed almost a 13% lower degradation percentage than a sample using 10% mechanical pulp. The trend to decreasing degradation percentage as a function of increasing mechanical pulp percentage shows results between ratios of about 10% mechanical pulp to 90% mechanical pulp. Finally, over successive drops, in general, the G-value also decreases as mechanical pulp ratio increases. In general, G-values of the third successive drop and sixth successive drop as well as G-value increase over the successive drops decreases with a higher percentage of mechanical pulp such as BCTMP.

Processes for forming cellulose-fiber foam products are described below, with additional comparison between cellulose-fiber foam products and molded fiber products. By way of background, molded fiber component formation generally includes pumping the slurry into a mold to form a green body (e.g., pumping the composition into the mold); and drying the green body into a molded fiber product. During the formation of a green body, the slurry may have a high proportion of fluid such as water as compared to the fiber component. The slurry may be created in a separate tank, and pumped into a mold containing a mesh configured to allow the fluid in the slurry to pass through while retaining the fibers in the mold. In molded fiber product formation, two-step part forming and heat pressing is generally required. That is, initially, a vacuum may be applied to the mold such that a portion of the fluid remaining in the fiber component may be removed from the mold, advancing the formation of the green body. A green body is the composition held in shape by the mold before it has dried and cured. The green body is then further formed in additional mold stages, either with vacuum or without. These steps may be separated by an oven drying step, but in any event, the slurry is formed into a rough part shape, and then a heat press shapes the ultimate part, similar to a stamping operation.

A foamed fiber slurry may be pumped into a volumetric mold such that the foamed slurry is sufficiently dewatered to retain a volumetric foamed fiber structure in the shape of the mold. The foamed fiber product may then be removed from the mold. Heat may be applied to the foamed fiber structure after dewatering and within the volumetric mold prior to removing the foamed fiber product from the mold or in a second mold or component after removing the foamed fiber structure from the mold.

As described above, some embodiments are directed to packaging, including a cellulose-fiber foam component formed from a foamed slurry. The foamed slurry includes a cellulose-fiber component to be foamed. The foamed slurry cures into a foamed fiber cellular structure when dried (e.g., cellulose-fiber foam). The foamed slurry is pumped into a mold at a rate such that the slurry may be rapidly dewatered, allowing the foamed fiber to solidify. In some embodiments, the cellulose-fiber foam component comprises a filled volume of foamed fiber, such that the cellulose-fiber foam component is a volumetric solid. In some embodiments, the cellulose-fiber foam component comprises a filled volume of foamed fiber having a uniform density within the filled volume. In some embodiments, the cellulose-fiber foam component comprises a filled volume of foamed fiber having a variable density within the filled volume.

Molded fiber slurry creation generally uses slurry primarily from water and fibers. In contrast, for cellulose-fiber foam slurry creation, the addition of air creates a foamed slurry. Mixing or agitation of the mixture forces air into the solution, creating the foam. And as discussed above, while foaming agents may be used, bonding agents that may serve a dual purpose of a foaming agent (such as PVOH, discussed herein) may be used in the creation of the foam. The foamed slurry may be pumped into a mold (e.g., a volumetric mold). In some embodiments, the cellulose-fiber foam slurry may have a consistency of between about 1% and about 10% fiber in relation to the remaining slurry content (e.g., water, foaming agent, etc.). Consistency is defined by percentage of fiber by weight (of the total slurry). In some embodiments, the consistency of the cellulose-fiber foam slurry may be between about 2% and about 8%. In some embodiments, the consistency of the cellulose-fiber foam slurry may be between about 3% and about 5%.

The foamed slurry may be injected at a high speed/velocity into the volumetric mold. The speed of the foam may contribute, for example, to how quickly foam bubbles start to pop or otherwise combine once they enter into the mold. The velocity (e.g., speed in a particular direction) may also determine ultimate parameters of the cellulose-fiber foam, in part due to parameters such as distance the foamed slurry travels before impacting a wall of the mold, angle of impact with a wall of the mold, etc. In some embodiments, the foamed slurry may be poured or otherwise introduced via a pump into the volumetric mold at a relatively lower speed/velocity, such that the consistency of density may be maintained during the forming of the cellulose-fiber foam component. In these embodiments, the process may be described as "casting", as opposed to "injecting".

The volumetric mold may have one or more screens lining the sides, similar to a molded fiber mold, configured to hold the fibers and additives in the mold while the water/fluid component is evacuated through openings in the mold. The screens may have uniform or varying aperture shapes and/or sizes. The cellulose-fiber foam product may be removed from the mold. In some embodiments, the cellulose-fiber foam product may be dried or partially dried (e.g., through heating) prior to removal from the mold. In some embodiments, the mold may be the shape of a packaging component, for example, a box, cushion, or tray, having a filled volume. In some embodiments, there may be a multistage mold, or additional molds for different packaging components, for example. The density of the dried molded fiber may be altered, for example, by altering the water content of the foamed slurry, or proportions of water, air, fiber, surfactant, and the like. Similar to the molded fiber processes described herein, this may be followed by an oven drying step, or further processing, e.g., coating, machining, pressing, painting, etc.

In some embodiments, due to the nature of the cellulose-fiber foam components, no separate heat pressing step is required. In some embodiments, no additional drying (e.g., in an oven, or secondary mold) is required, as the mold used in cellulose-fiber foam processing may be configured to heat and dry the finished part in situ. In this regard, cellulose-fiber foam components may require less energy and processing, and may save on energy costs of drying and other production costs, due to their rapid dewatering.

The fiber used in the cellulose-fiber foam components may include, for example, recycled fibers, plant based fibers, post-consumer waste fibers, post-industrial waste fibers, straw fibers, hardwood fibers, or softwood fibers, bamboo fibers, and bagasse fibers. Other organic or inorganic fillers may be included. Chemical additives may be included into the foamed slurry, such as a retention aid, a drainage aid, a surface sizing agent, a dye, an optical brightener, a whitening agent, or an internal bonding agent, for example.

Additionally, the cellulose-fiber foam components described may be re-pulpable, e.g., when re-introduced to a recycling stream they may be broken down into a pulp of their constituent parts for easy recyclability. In some embodiments, additional components or processing is contemplated such that the cellulose-fiber foam components are not re-pulpable.

Each of the components may be composed of recyclable materials including the shipping packaging, finished packaging, seals, and other related components. Thus, if and when the customer opts to dispose of the packaging, the packaging may simply be recycled without requiring material separation (e.g., in a single-stream recycling program). Advantageously, this improves upon prior systems having, for example, retention film shipping systems or polystyrene cushioning.

Each of the components and their constituent parts, and other variations described herein may include corresponding features described with reference to each of the other components and features described without limitation.

As used herein, numeric ranges are inclusive of the numbers defining the range. As used herein, the terms "about" and "approximately" are inclusive of the number to which it refers and includes numbers that bound and are within a range of 5%-10% except where such number would exceed 100% of a possible value.

## Claims

1. Packaging (1), comprising:
a base box (30);
a lid (20) configured to dose the base box and enclose a product (10) within the packaging; and
a cellulose-fiber foam component formed configured to provide cushioning and is formed in a cushioning component for the packaging, wherein the cellulose-fiber foam component is formed from a foamed slurry cured into a foamed fiber cellular structure, the foamed slurry comprising:
a mechanical fiber component (200);
a chemical fiber component; and
a bonding agent which obviates the need for a stand-alone foaming agent,
wherein the cellulose-fiber foam component comprises a filled volume of foamed fiber, such that the cellulose-fiber foam component is a volumetric solid.

2. The packaging of claim 1, wherein the bonding agent further comprises foaming properties when in the foamed slurry, such that the bonding agent also serves as a foaming agent when in the foamed slurry.

3. The packaging of claim 1, the bonding agent comprising polyvinyl alcohol.

4. The packaging of claim 1, wherein the cellulose-fiber foam component has a density of less than 40 kg/m³; preferably wherein the cellulose-fiber foam component has a density of less than 35 kg/m³.

5. The packaging of claim 1, the mechanical fiber component has an average fiber length of greater than 1 mm.

6. The packaging of claim 1, wherein the cellulose-fiber foam component is re-pulpable.

7. A composition, comprising:
a mechanical fiber component;
a chemical fiber component; and
a bonding agent,
wherein the composition is moldable in three dimensions and forms a cellulose-fiber foam structure configured to provide cushioning and is formed in a cushioning component for the packaging when dried, and wherein a surfactant is not used in the forming of the composition.

8. The composition of claim 7, wherein a ratio of mechanical fiber to chemical fiber is in a range between about 98:2 to about 40:60.

9. The composition of claim 7, wherein the mechanical fiber is about 70% of the composition, and wherein the chemical fiber is about 30% of the composition; or wherein when the composition is formed into a cellulose-fiber foam structure, it has a density of less than 35 kg/m³.

10. The composition of claim 8, wherein the mechanical fiber component has an average fiber length of greater than 1 mm.

11. The composition of claim 7, the bonding agent comprising polyvinyl alcohol.

12. The composition of claim 10, wherein the polyvinyl alcohol has a degree of hydrolysis of between about 60% to about 90%, preferably wherein the polyvinyl alcohol has a degree of hydrolysis that provides a foaming agent effect when the composition is formed into a foamed slurry.

13. A method of forming a cellulose-fiber foam component configured to provide cushioning and formed in a cushioning component for the packaging, the method comprising:
forming a foamed fiber slurry, the fiber slurry comprising:
a mechanical fiber component;
a chemical fiber component;
a fluid component; and
a bonding agent, wherein the bonding agent serves as a foaming agent;
introducing the foamed slurry into a volumetric mold such that the foamed slurry is sufficiently dewatered to retain a volumetric foamed fiber structure in the shape of the mold; and
removing the cellulose-fiber foam component from the mold.

14. The method of claim 13, wherein no surfactant is used in the formation of the cellulose-fiber foam component; or wherein the foamed slurry is introduced into volumetric mold such that the foamed fiber product produced has a consistent density throughout the volume; or wherein the bonding agent comprises polyvinyl alcohol.

15. The composition of claim 9, wherein the mechanical fiber component has an average fiber length of greater than 1 mm, preferably wherein the polyvinyl alcohol has a degree of hydrolysis of between about 60% to about 90%.

## Patentansprüche

1. Verpackung (1), umfassend:
einen Grundkarton (30);
einen Deckel (20), der so ausgebildet ist, dass er den Grundkörper verschließt und ein Produkt (10) in der Verpackung umschließt; und
eine Zellulosefaserschaumkomponente, die so ausgebildet ist, dass sie eine Polsterung bereitstellt, und die als Polsterkomponente für die Verpackung ausgebildet ist, wobei die Zellulosefaserschaumkomponente aus einer geschäumten Aufschlämmung gebildet ist, die zu einer geschäumten Faserstruktur ausgehärtet wurde, wobei die geschäumte Aufschlämmung umfasst:
eine mechanische Faserkomponente (200);
eine chemische Faserkomponente; und
ein Bindemittel, das die Notwendigkeit eines eigenständigen Treibmittels überflüssig macht,
wobei die Zellulosefaserschaumkomponente ein gefülltes Volumen aus geschäumter Faser umfasst, so dass die Zellulosefaserschaumkomponente ein voluminöser Feststoff ist.

2. Verpackung nach Anspruch 1, wobei das Bindemittel in der aufgeschäumten Aufschlämmung zusätzlich schäumende Eigenschaften aufweist, so dass das Bindemittel in der aufgeschäumten Aufschlämmung auch als Treibmittel dient.

3. Verpackung nach Anspruch 1, wobei das Bindemittel Polyvinylalkohol umfasst.

4. Verpackung nach Anspruch 1, wobei die Zellulosefaserschaumkomponente eine Dichte von weniger als 40 kg/m³ aufweist; vorzugsweise wobei die Zellulosefaserschaumkomponente eine Dichte von weniger als 35 kg/m³ aufweist.

5. Verpackung nach Anspruch 1, wobei die mechanische Faserkomponente eine durchschnittliche Faserlänge von mehr als 1 mm aufweist.

6. Verpackung nach Anspruch 1, wobei die Zellulosefaserschaumkomponente wiederaufbereitbar ist.

7. Zusammensetzung, umfassend:
eine mechanische Faserkomponente;
eine chemische Faserkomponente; und
ein Bindemittel,
wobei die Zusammensetzung dreidimensional formbar ist und eine Zellulosefaserschaumstruktur bildet, die so konfiguriert ist, dass sie eine Polsterung bereitstellt, und die nach dem Trocknen zu einer Polsterkomponente für die Verpackung geformt wird, und wobei bei der Herstellung der Zusammensetzung kein Tensid verwendet wird.

8. Zusammensetzung nach Anspruch 7, wobei das Verhältnis von mechanischen Fasern zu chemischen Fasern in einem Bereich zwischen etwa 98:2 und etwa 40:60 liegt.

9. Zusammensetzung nach Anspruch 7, wobei die mechanische Faser etwa 70 % der Zusammensetzung ausmacht und wobei die chemische Faser etwa 30 % der Zusammensetzung ausmacht; oder wobei die Zusammensetzung, wenn sie zu einer Zellulosefaserschaumstruktur geformt wird, eine Dichte von weniger als 35 kg/m³ aufweist.

10. Zusammensetzung nach Anspruch 8, wobei die mechanische Faserkomponente eine durchschnittliche Faserlänge von mehr als 1 mm aufweist.

11. Zusammensetzung nach Anspruch 7, wobei das Bindemittel Polyvinylalkohol umfasst.

12. Zusammensetzung nach Anspruch 10, wobei der Polyvinylalkohol einen Hydrolysegrad zwischen etwa 60 % und etwa 90 % aufweist, vorzugsweise wobei der Polyvinylalkohol einen Hydrolysegrad aufweist, der eine schäumende Wirkung bewirkt, wenn die Zusammensetzung zu einer geschäumten Aufschlämmung geformt wird.

13. Verfahren zum Herstellen einer Zellulosefaserschaumkomponente, die zur Dämpfung ausgelegt ist und in einer Dämpfungskomponente für die Verpackung ausgebildet wird, wobei das Verfahren umfasst:
Bilden einer geschäumten Fasersuspension, wobei die Fasersuspension umfasst:
eine mechanische Faserkomponente;
eine chemische Faserkomponente;
eine Flüssigkeitskomponente; und
ein Bindemittel, wobei das Bindemittel als Treibmittel dient;
Einbringen der aufgeschäumten Aufschlämmung in eine volumetrische Form, so dass die aufgeschäumte Aufschlämmung ausreichend entwässert wird, um eine volumetrische Schaumfaserstruktur in Form der Form beizubehalten; und
Entnehmen der Zellulosefaser-Schaumkomponente aus der Form.

14. Verfahren nach Anspruch 13, wobei bei der Herstellung der Zellulosefaserschaumkomponente kein Tensid verwendet wird; oder wobei die geschäumte Aufschlämmung in eine volumetrische Form eingebracht wird, so dass das hergestellte geschäumte Faserprodukt über das gesamte Volumen eine gleichmäßige Dichte aufweist; oder wobei das Bindemittel Polyvinylalkohol umfasst.

15. Zusammensetzung nach Anspruch 9, wobei die mechanische Faserkomponente eine durchschnittliche Faserlänge von mehr als 1 mm aufweist, vorzugsweise wobei der Polyvinylalkohol einen Hydrolysegrad zwischen etwa 60 % und etwa 90 % aufweist.

## Revendications

1. Emballage (1) comprenant :
une boîte de base (30) ;
un couvercle (20) configuré pour fermer la boîte de base et enfermer un produit (10) à l'intérieur de l'emballage ; et
un composant mousse de fibres de cellulose façonné et configuré pour assurer un amortissement et façonné en un composant d'amortissement pour l'emballage, dans lequel le composant mousse de fibres de cellulose est façonné à partir d'une suspension moussée durcie pour donner une structure cellulaire de fibres moussée, la suspension moussée comprenant :
un composant fibres mécaniques (200) ;
un composant fibres chimiques ; et
un agent de liaison, qui élimine le besoin d'un agent moussant autonome,
dans lequel le composant mousse de fibres de cellulose comprend un volume rempli de fibres moussées, de telle sorte que le composant mousse de fibres de cellulose soit un solide volumétrique.

2. Emballage selon la revendication 1, dans lequel l'agent de liaison présente en outre des propriétés moussantes quand il se trouve dans la suspension moussée, de telle sorte que l'agent de liaison serve d'agent moussant quand il se trouve dans la suspension moussée.

3. Emballage selon la revendication 1, dans lequel l'agent de liaison comprend du poly(alcool vinylique).

4. Emballage selon la revendication 1, dans lequel le composant mousse de fibres de cellulose a une masse volumique inférieure à 40 kg/m³ ; de préférence dans lequel le composant mousse de fibres de cellulose a une masse volumique inférieure à 35 kg/m³.

5. Emballage selon la revendication 1, dans lequel le composant fibres mécaniques a une longueur moyenne de fibre supérieure à 1 mm.

6. Emballage selon la revendication 1, dans lequel le composant mousse de fibres de cellulose est repulpable.

7. Composition comprenant :
un composant fibres mécaniques ;
un composant fibres chimiques ; et
un agent de liaison,
la composition pouvant être moulée en trois dimensions et formant une structure de mousse de fibres de cellulose configurée pour assurer un amortissement, et façonnée en un composant d'amortissement pour l'emballage quand elle est séchée, et un tensioactif n'étant pas utilisé lors du façonnage de la composition.

8. Composition selon la revendication 7, dans laquelle le rapport des fibres mécaniques aux fibres chimiques est compris dans la plage entre environ 98:2 et environ 40:60.

9. Composition selon la revendication 7, dans laquelle les fibres mécaniques représentent environ 70 % de la composition, et dans laquelle les fibres chimiques représentent environ 30 % de la composition ; ou dans laquelle, quand la composition est façonnée en une structure de mousse de fibres de cellulose, elle a une masse volumique inférieure à 35 kg/m³.

10. Composition selon la revendication 8, dans laquelle le composant fibres mécaniques a une longueur moyenne de fibre supérieure à 1 mm.

11. Composition selon la revendication 7, dans laquelle l'agent de liaison comprend du poly(alcool vinylique).

12. Composition selon la revendication 10, dans laquelle le poly(alcool vinylique) présente un degré d'hydrolyse entre environ 60 % et environ 90 %, de préférence dans laquelle le poly(alcool vinylique) présente un degré d'hydrolyse qui assure un effet d'agent moussant quand la composition est façonnée en une suspension moussée.

13. Procédé de façonnage d'un composant mousse de fibres de cellulose configuré pour assurer un amortissement et façonné en un composant d'amortissement pour l'emballage, le procédé comprenant :
le façonnage d'une suspension de fibres moussée, la suspension de fibres comprenant :
un composant fibres mécaniques ;
un composant fibres chimiques ;
un composant fluide ; et
un agent de liaison, l'agent de liaison servant d'agent moussant ;
l'introduction de la suspension moussée dans un moule volumétrique de telle sorte que la suspension moussée soit suffisamment essorée pour retenir une structure de fibres moussée volumétrique épousant la forme du moule ; et
le retrait du composant mousse de fibres de cellulose du moule.

14. Procédé selon la revendication 13, dans lequel aucun tensioactif n'est utilisé pour le façonnage du composant mousse de fibres de cellulose ; ou dans lequel la suspension moussée est introduite dans le moule volumétrique de telle sorte que le produit fibreux moussé produit présente une masse volumique constante dans tout son volume ; ou dans lequel l'agent de liaison comprend du poly(alcool vinylique).

15. Composition selon la revendication 9, dans laquelle le composant fibres mécaniques a une longueur moyenne de fibre supérieure à 1 mm, de préférence dans laquelle le poly(alcool vinylique) présente un degré d'hydrolyse entre environ 60 % et environ 90 %.
